# EUROPÄISCHE PATENTSCHRIFT

(11) **EP 1 756 402 B1**
(45) Veröffentlichungstag und Bekanntmachung des Hinweises auf die Patenterteilung: **22.07.2009**
(21) Anmeldenummer: 05737939.8
(22) Anmeldetag: 25.04.2005
(51) Int. Cl.: F01N 3/022, F01N 3/035, F01N 7/16, B28B 3/20

(54) **FILTEREINRICHTUNG FÜR EIN ABGASSYSTEM EINER BRENNKRAFTMASCHINE, SOWIE VERFAHREN ZUM HERSTELLEN EINER SOLCHEN FILTEREINRICHTUNG**
FILTER DEVICE FOR AN EXHAUST GAS SYSTEM OF AN INTERNAL COMBUSTION ENGINE, AND METHOD FOR PRODUCING SUCH A FILTER DEVICE
DISPOSITIF FILTRE POUR UN SYSTEME DE GAZ D'ECHAPPEMENT D'UN MOTEUR A COMBUSTION INTERNE, ET PROCEDE DE FABRICATION DUDIT DISPOSITIF FILTRE

(30) Priorität: 08.06.2004 DE 102004027818
(43) Veröffentlichungstag der Anmeldung: 28.02.2007
(73) Patentinhaber: ROBERT BOSCH GMBH, 70442 Stuttgart (DE)
(72) Erfinder: EISELE, Ulrich, 70199 Stuttgart (DE)
(86) Internationale Anmeldenummer: PCT/EP2005/051840
(87) Internationale Veröffentlichungsnummer: WO 2005/121513

(56) Entgegenhaltungen:
- EP-A- 0 333 559
- EP-A- 1 125 704
- WO-A-20/04024294
- DE-A1- 3 043 996
- FR-A- 2 840 545
- PATENT ABSTRACTS OF JAPAN Bd. 010, Nr. 235 (C-366), 14. August 1986 (1986-08-14) & JP 61 068141 A (TOYOTA MOTOR CORP), 8. April 1986 (1986-04-08)

## Beschreibung

### Stand der Technik

Die Erfindung betrifft ein Verfahren zum Herstellen einer Filtereinrichtung für das Abgassystem einer Brennkraftmaschine, bei der ein Material so extrudiert und danach gesintert wird, dass eine Filterstruktur entsteht, welche zueinander unmittelbar benachbarte Kanäle umfasst, die eine wenigstens abschnittsweise gemeinsame poröse Filterwand aufweisen und abwechselnd am stromaufwärtigen oder am stromabwärtigen Ende verschlossen sind.

Ein Verfahren der eingangs genannten Art ist aus der DE 10130 338 A1 bekannt. Ein dort gezeigter Wandfluss-Oberflächenfilter weist eine Vielzahl von in Strömungsrichtung verlaufenden wabenartigen Kanälen auf. Diese sind abwechselnd an ihrem stromaufwärtigen bzw. stromabwärtigen Ende verschlossen, so dass einzelne Taschen gebildet werden. Zwischen den einzelnen Kanälen sind poröse Filterwände angeordnet, durch die der Abgasstrom im Betrieb hindurchtritt. Rußpartikel werden hierdurch aus dem Abgas abgeschieden und in Form eines Filterkuchens auf der stromaufwärtigen Oberfläche der Filterwände abgeschieden.

Vom Markt her bekannt ist es, derartige Filter aus einem keramischen Material, beispielsweise aus Cordierit oder Mullit herzustellen. Auch rekristallisiertes SiC sowie Sintermetall kommen als Werkstoff für derartige Filtereinrichtungen in Frage. Alle genannten Werkstoffe weisen eine hohe Thermoschockresistenz auf, die für eine lange Lebensdauer der Filtereinrichtung erforderlich ist. Die chemische Beständigkeit der verwendeten Materialien ist jedoch zum Teil nicht optimal, und zum Teil führen die verwendeten Materialien zu hohen Herstellkosten der Filtereinrichtung.

Aus der WO 2004/024294 und der EP1125704 sind Filterkörper mit gekrümmten Filterwänden bekannt.

Aufgabe der vorliegenden Erfindung ist es, das eingangs genannte Verfahren so weiterzubilden, dass mit ihm eine Filtereinrichtung mit hoher Thermoschockresistenz und guter chemischer Beständigkeit bei geringen Kosten hergestellt werden kann.

Die gestellte Aufgabe wird bei einem Verfahren der eingangs genannten Art dadurch gelöst, dass bei der Extrusion die Filterwand wenigstens bereichsweise mit einer Krümmung versehen wird, wobei ein Gas eingeblasen wird.

### Vorteile der Erfindung

Bei dem erfindungsgemäßen Verfahren muss die Thermoschockresistenz nicht mehr allein durch die Materialeigenschaften bereit gestellt werden, sondern sie wird durch die konstruktive Auslegung der Filtereinrichtung erzielt. Aufgrund der wenigstens bereichsweise vorab gekrümmten Filterwände können sich nämlich durch Temperaturgradienten hervorgerufene Dehnungen durch eine entsprechende Änderung des Krümmungsradius der belasteten Filterwand abbauen. Kritische mechanische Spannungen in den Filterwänden aufgrund starker Temperaturgradienten werden hierdurch bei nahezu beliebigen Materialen vermieden. Somit muss das Material selbst keine hohe Thermoschockresistenz aufweisen, so dass es vor allem im Hinblick auf niedrige Fertigungskosten und eine gute chemische Beständigkeit ausgewählt werden kann. Hierdurch wird eine preiswerte Filtereinrichtung mit guter chemischer Beständigkeit und langer Lebensdauer möglich. In vorteilhafter Weise wird während des Extrudierens ein Gas eingeblasen, so dass die Filterwände wenigstens abschnittsweise wellenartig gekrümmt sind.

Vorteilhafte Weiterbildungen der Erfindung sind in Unteransprüchen angegeben.

In Weiterbildung des erfindungsgemäßen Verfahrens wird zunächst vorgeschlagen, dass mindestens ein für zwei benachbarte Kanäle gemeinsamer Filterwandabschnitt so gekrümmt wird, dass er im Querschnitt vom einen Kanal ausgesehen konkav und vom anderen Kanal ausgesehen konvex ist. Bei dieser Weiterbildung wird die Krümmung der Filterwand in einer zur Längsachse der Kanäle senkrecht stehenden Ebene erzielt. Dies ist sehr einfach und preiswert durch eine entsprechende Ausgestaltung der Extruderdüse realisierbar. Durch eine solche Ausgestaltung werden vor allem Spannungen in Querrichtung, also in besagter Ebene, aufgenommen bzw. abgebaut.

In Weiterbildung hierzu wird vorgeschlagen, dass im Querschnitt die Filterwandabschnitte von einem einlassseitigen Kanal ausgehen konkav und von einem auslassseitigen Kanal ausgehen konvex gekrümmt sind, derart, dass der Strömungsquerschnitt des auslassseitigen Kanals kleiner ist als jener des einlassseitigen Kanals. Hierdurch wird in den einlassseitigen Kanälen eine größere Oberfläche und ein größeres Strömungsvolumen zur Verfügung gestellt, welches beispielsweise für die Ablagerung von Rußpartikeln und Asche und/oder eine katalytische Einrichtung für die Regenerierung der Filtereinrichtung verwendet werden kann. Die auslassseitigen Kanäle sind entsprechend kleiner, so dass die Gesamtabmessungen der Filtereinrichtung nicht oder kaum ansteigen. Eine derartige ausgestaltete Filtereinrichtung stellt also eine gute Filterkapazität zur Verfügung bei gleichzeitig kleinen Abmessungen.

Möglich ist auch, dass die Filterwand eines Kanals wenigstens abschnittsweise in Längsrichtung wellenartig gekrümmt ist. Hier werden die Krümmungen, welche zur spannungsarmen Aufnahme von Temperaturdehnungen erfindungsgemäß vorgesehen sind, nicht in einer Ebene quer zu Längsrichtung der Kanäle, sondern in Längsrichtung der Kanäle erzeugt. Entsprechend werden hierdurch mechanische Spannungen, welche aufgrund von Temperaturgradienten in Längsrichtung entstehen, abgebaut bzw. aufgenommen. Hergestellt kann eine solche wellen- oder schlangenlinienartige Krümmung auf einfache und somit preiswerte Art und Weise dadurch, dass in benachbarte Kanäle während des Extrudierens abwechselnd und intermittierend ein Gas, vorzugsweise Luft oder Stickstoff, eingeblasen wird. Werden die Krümmungen in Längsrichtung mit jenen in Querrichtung kombiniert (biaxiale Krümmung), können Spannungen in beliebiger Richtung abgebaut werden.

Besonders prägnant sind die erfindungsgemäßen Vorteile, wenn die Filterwände durch Sintern hergestellt sind und ZrO₂ umfassen. Vorzugsweise bestehen die Filterwände aus Mg- oder Y-teilstabilisiertem ZrO₂. Dieser Werkstoff ist auch bei hohen Temperaturen unempfindlich gegenüber Erdalkalien (Ca und Mg werden in das Gitter, eingebaut) und Alkalien (es bildet sich keine niedrigschmelzende Phase im System ZrO₂-Na₂O). Eine Hochtemperaturkorrosion findet somit nicht statt. Ein weiterer Vorteil dieses Werkstoffs liegt in seiner hohen mechanischen Festigkeit und in der Tatsache, dass er einen ähnlichen Wärmedehnungskoeffizienten aufweist wie Stahl. Da die Filterstruktur üblicherweise in einem Gehäuse aus Stahl untergebracht ist, entstehen daher im Betrieb keine Wärmedehnungsspannungen zwischen der Filterstruktur und einem solchen Gehäuse. Zwar ist die Wärmedehnung von ZrO₂ höher als bei anderen bisher für Filterstrukturen verwendeten Werkstoffen; aufgrund der erfindungsgemäßen konstruktiven Auslegung führt dies jedoch nicht zu unzulässigen Spannungen in der Struktur.

Besonders vorteilhaft ist die Verwendung von ZrO₂ dann, wenn die Filterwände zusätzlich ein oxidisch katalytisches Material, insbesondere CeO₂ und/oder TiO₂ und/oder Sc₂O₃, umfassen. Alternativ oder zusätzlich kann die oxidisch katalytische Schicht auch durch eine Dotierung des Grundmaterials ZrO₂ mit CeO₂ und/oder TiO₂ und/oder Sc₂O₃ aufgebracht werden. Durch eine oxidisch katalytische Oberfläche, insbesondere im stromaufwärtsgelegenen Bereich einer Filterwand, kann die Regenerierung, also der Abbrand angelagerter Rußpartikel, erleichtert werden. Wenn die Beschichtung nach einer Vorsinterung und vor dem eigentlichen Sintervorgang durch Tauchen aufgebracht wird, bildet sich beim Sintern ein Mischkristall und ein gradierter Übergang zum Grundmaterial ZrO₂. Dies verhindert, dass die Schicht mit oxidisch katalytischem Material im Betrieb vom ZrO₂ abplatzt. Es wird auf diese Weise eine besonders beständige Filtereinrichtung geschaffen. Die Vorsinterung erfolgt dabei vorzugsweise bei einer Temperatur von 600°C bis 1100°C.

Die Porosität der Filterwand wird vorzugsweise durch eine Beimischung eines organischen Porenbilders, insbesondere eines Feinpulvers aus mindestens einem Thermoplast, aus mindestens einem Duroplast oder Graphit und/oder aus einem amorphen Kohlstoff über dessen Konzentration und/oder Größenverteilung eingestellt. Derartige Porenbilder brennen beim Sintern aus. Anders als beim unvollständigen Sintern eines groben Ausgangspulvers hat man hierdurch die Freiheit, das keramische Gefüge hinsichtlich der mechanischen Festigkeit zu optimieren, beispielsweise ein besonders feinkörniges Gefüge herzustellen. Auch dies kommt letztlich der Lebensdauer der erfindungsgemäßen Filtereinrichtung zugute.

### Zeichnungen

Nachfolgend werden besonders bevorzugte Ausführungsbeispiele der Erfindung unter Bezugnahme auf die beiliegende Zeichnung näher erläutert.

In der Zeichnung zeigen:
- Figur 1: eine schematische Seitenansicht eines Abgassystems einer Brennkraftmaschine mit einer Filtereinrichtung;
- Figur 2: eine perspektivische Darstellung von vorne einer Filterstruktur der Filtereinrichtung von Figur 1;
- Figur 3: eine perspektivische Darstellung von hinten der Filterstruktur von Figur 1;
- Figur 4: eine vergrößerte Schnittansicht durch einen Bereich der Filterstruktur von Figur 1, wobei die Schnittebene quer zur Längsrichtung der Filterstruktur liegt;
- Figur 5: eine vergrößerte Schnittansicht eines Bereichs der Filterstruktur von Figur 4 längs der Linie V-V; und
- Figur 6: ein Ablaufschema eines Verfahrens zum Herstellen der Filterstruktur von Figur 1.

### Beschreibung der Ausführungsbeispiele

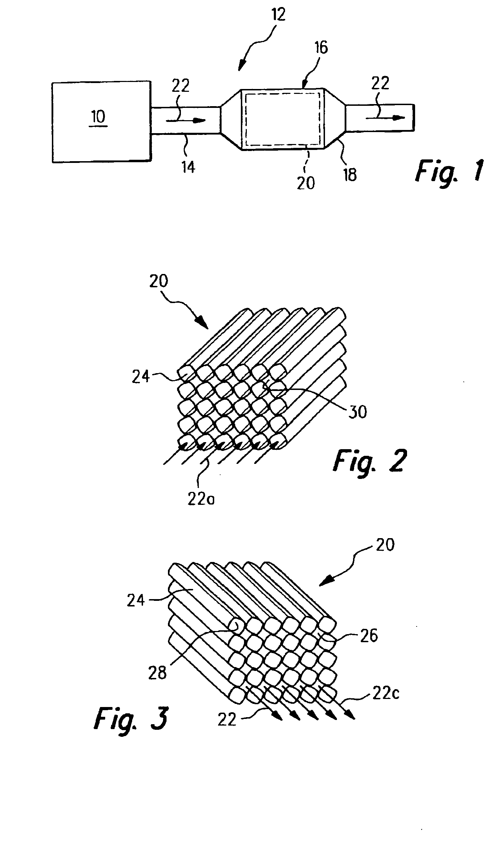

Eine Brennkraftmaschine trägt in Figur 1 das Bezugszeichen 10. Die Verbrennungsabgase werden durch ein Abgassystem 12 abgeführt, welches ein Abgasrohr 14 und eine als Partikelfilter ausgebildete Filtereinrichtung 16 umfasst. Das Abgassystem 12 kann auch noch weitere Komponenten umfassen, beispielsweise Katalysatoren etc., die jedoch in Figur 1 nicht gezeigt sind. Der Partikelfilter 16 umfasst ein Gehäuse 18 aus Stahl und eine in dem Gehäuse 18 aufgenommene Filterstruktur 20. Deren genauer Aufbau wird weiter unten im Detail beschrieben.

Das Abgas strömt durch das Abgasrohr 14 in Richtung der Pfeile 22. Durch die Filterstruktur 20 werden Rußpartikel, die im Abgas enthalten sind, zurückgehalten.

Wie aus den Figuren 2 und 3 hervorgeht, umfasst die Filterstruktur 20 eine Vielzahl von Einlasskanälen 24 und von Auslasskanälen 26, welche jeweils in Längsrichtung und parallel zueinander angeordnet sind (in den Figuren 2 und 3 sind nur zwei Kanäle mit Bezugszeichen versehen). Die Einlasskanäle 24 sind an ihrem stromabwärtigen Ende durch Abdeckungen 28 verschlossen (vergleiche Figur 3), die Auslasskanäle 26 an ihrem stromaufwärtigen Ende durch Abdeckungen 30.

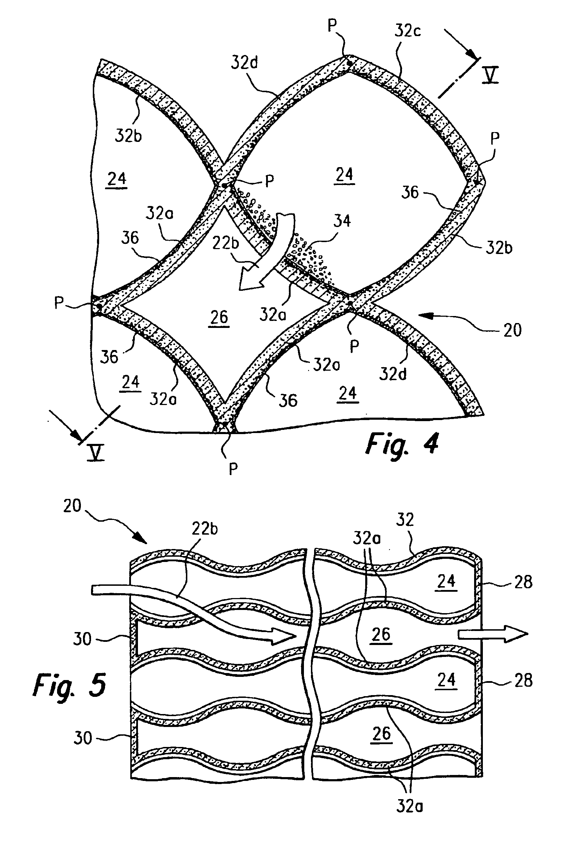

Die Einlasskanäle 24 und die Auslasskanäle 26 werden von porösen Filterwänden 32 aus Y-teilstabilisertem ZrO₂ begrenzt (Figur 4), wobei die in Figur 4 sichtbaren Filterwände 32 Abschnitte 32a aufweisen, die sowohl einen Bereich eines Einlasskanals 24 als auch einen Bereich eines Auslasskanals 26 begrenzen. Die anderen in Figur 4 gezeichneten Filterwandabschnitte 32b bis 32d begrenzen nur einen Einlasskanal 24. Die jeweiligen Filterwandabschnitte 32a bis 32d sind in der in Figur 4 gezeigten Schnittebene von einem Einlasskanal 24 aus gesehen konkav und von einem Auslasskanal 26 aus gesehen konvex gekrümmt. Hierdurch ergibt sich bei gleichmäßig verteilten "Gitterpunkten" P der Filterstruktur 20, dass die freie Querschnittsfläche eines Auslasskanals 24 kleiner ist als die freie Querschnittsfläche eines Einlasskanals 24. Auch die einem Einlasskanal 24 zugewandte freie Oberfläche einer Filterwand 32 ist größer als jene, die einem Auslasskanal 26 zugewandt ist.

Wie aus Figur 5 hervorgeht, sind die Filterwände 32 jedoch nicht nur in einer Ebene quer zur Längsrichtung der Filterstruktur 20, sondern auch in einer Längsebene der Filterstruktur 20 wellenartig gekrümmt. Im Betrieb tritt das Abgas in die Einlasskanäle 24 ein (Pfeile 22a in Figur 2), tritt durch die zwischen einem Einlasskanal 24 und einem Auslasskanal 26 liegende Filterwand 32 hindurch (Pfeil 22b in den Figuren 4 und 5) und tritt aus der Filterstruktur 20 über die Auslasskanäle 26 aus (Pfeile 22c in Figur 3).

Beim Durchgang durch die Filterwand 32a werden Rußpartikel 34 an der stromaufwärtsgelegene Oberfläche der Filterwand 32 abgeschieden. Um zu verhindern, dass im Laufe der Zeit der Gegendruck des Abgases aufgrund der sich ablagernden Rußpartikel 34 in unzulässiger Weise ansteigt, wird der Partikelfilter 16 von Zeit zu Zeit regeneriert. Hierzu wird beispielsweise die Temperatur des Abgases kurzzeitig erhöht, wodurch die angelagerten Rußpartikel 34 verbrennen. Um jedoch die notwendige Erhöhung der Abgastemperatur zu begrenzen, ist in den stromaufwärtsgelegenen Bereich einer Filterwand 32 ein oxidisch katalytisches Material eingebunden, beispielsweise CeO₂, TiO₂ oder Sc₂O₃. Der entsprechende oberflächennahe Bereich trägt in Figur 4 das Bezugszeichen 36. Er kann auch einfach eine Oberflächenbeschichtung umfassen.

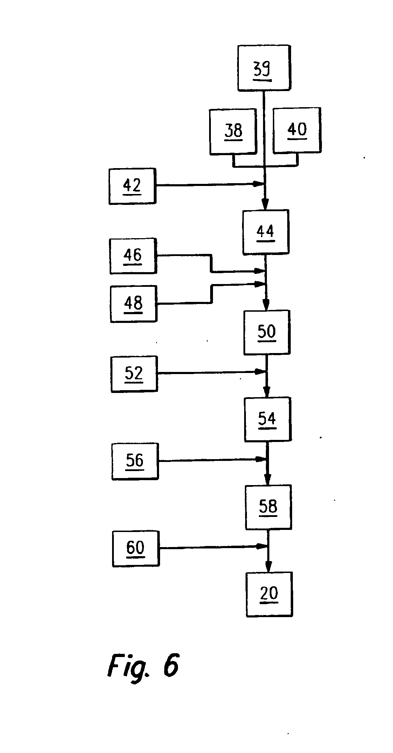

Die in den Figuren 1 bis 5 gezeigte Filterstruktur 20 wird folgendermaßen hergestellt (vergleiche Figur 6): Zunächst werden das Grundmaterial 38, ein organischer Binder 39 und ein Porenbilder 40, beispielsweise ein Feinpulver aus einem Thermoplast, welches eine hohe Glastemperatur aufweist, aus einem Duroplast, aus Graphit oder aus einem amorphen Kohlenstoff, mittels einer Mischeinrichtung 42 gemischt. Bei dieser handelt es sich im Allgemeinen um eine Kneteinrichtung, die die einzelnen Komponenten je nach Anforderungen auch bei erhöhter Temperatur verknetet.

Das sich ergebende Stoffgemisch 44 ist, abhängig vom Binder 39, eine plastische Masse oder ein Granulat und wird mittels eines Extruders 46 extrudiert. Hierdurch wird die Filterstruktur 20 mit den Einlasskanälen 24 und den Auslasskanälen 26 hergestellt. Durch Einblasen eines Gases, beispielsweise von Luft oder Stickstoff, aus der Extrusionsdüse in die Kanäle 24 und 26 werden die Filterwandabschnitte 32a bis 32d gekrümmt. Das Gas wird intermittierend und abwechselnd stoßweise entweder in die Einlasskanäle 24 oder in die Auslasskanäle eingeblasen (Block 48 in Figur 6). Hierdurch ergibt sich die in Figur 5 dargestellte wellen- oder schlangenlinienförmige Längskrümmung der Filterwände 32 der Filterstruktur 20. Die in Figur 4 gezeigte Querkrümmung der Filterwände 32 wird durch eine entsprechende Formgebung der Extrusionsdrüse bewirkt. Der sich durch die Extrusion mittels des Extruders 46 und die Gasbeaufschlagung mittels der Einrichtung 48 ergebende Rohling trägt in Figur 6 das Bezugszeichen 50.

In dem vorliegenden Ausführungsbeispiel wird dieser Rohling 50 in einem Sinterofen 52 bei 600°C bis 1100°C vorgesintert, was einen Vorgrünling 54 ergibt. Dieser wird nun in ein Bad 56 mit einem oxidisch katalytisch aktiven Material eingetaucht, was den eigentlichen Grünling 58 ergibt. In einem nicht dargestellten Ausführungsbeispiel wird dieser Schritt weggelassen. In einem Ofen 60 wird dieser gesintert, wobei das katalytisch aktive Material mit dem ZrO₂ einen Mischkristall bildet, und wodurch sich ein gradierter Übergang von der Oberfläche einer Filterwand 32 zum Grundmaterial ZrO₂ ausbildet.

## Patentansprüche

1. Verfahren zum Herstellen einer Filtereinrichtung (16) für das Abgassystem (12) einer Brennkraftmaschine (10), bei der ein Material (38, 40) so extrudiert (46) und danach gesintert (60) wird, dass eine Filterstruktur (20) entsteht, welche zueinander unmittelbar benachbarte Kanäle (24, 26) umfasst, die eine wenigstens abschnittsweise gemeinsame poröse Filterwand (32) aufweisen und abwechselnd am stromaufwärtigen oder am stromabwärtigen Ende verschlossen sind (28, 30), wobei bei der Extrusion (46) die Filterwand (32) wenigstens bereichsweise mit einer Krümmung versehen wird, **dadurch gekennzeichnet, dass** in benachbarte Kanäle (24 ,26) während des Extrudierens abwechselnd intermittierend ein Gas, vorzugsweise Luft oder Stickstoff, eingeblasen wird (48), so dass die Filterwand (32) wenigstens abschnittsweise in Längsrichtung wellenartig gekrümmt ist.

2. Verfahren nach Anspruch 1, **dadurch gekennzeichnet, dass** der Extruder (46) so ausgebildet ist, dass mindestens ein für zwei benachbarte Kanäle (24, 26) gemeinsamer Filterwandabschnitt (32a) im Querschnitt vom einen Kanal (24) aus gesehen konkav und vom anderen Kanal (26) aus gesehen konvex gekrümmt ist.

3. Verfahren nach einem der vorhergehenden Ansprüche, **dadurch gekennzeichnet, dass** zur Herstellung der Filterwand (32) ZrO₂ verwendet wird.

4. Verfahren nach Anspruch 3, **dadurch gekennzeichnet, dass** vor dem eigentlichen Sintervorgang (60) die Filterstruktur (20) wenigstens bereichsweise in ein oxidisch katalytisches Material (36), insbesondere CeO₂ und/oder TiO₂ und/oder Sc₂O₃, getaucht wird (56).

5. Verfahren nach Anspruch 4, **dadurch gekennzeichnet, dass** vor dem Tauchen (56) eine Vorsinterung (52) bei ungefähr 600 bis 1100°C durchgeführt wird.

6. Verfahren nach einem der Ansprüche 3 bis 5, **dadurch gekennzeichnet, dass** das ZrO₂ mit CeO₂ und/oder TiO₂ und/oder Sc₂O₃ dotiert wird.

7. Verfahren nach einem der vorhergehenden Ansprüche, **dadurch gekennzeichnet, dass** die Porosität der Filterwand (32) durch Beimischung (42) eines organischen Porenbilders (40), insbesondere eines Feinpulvers aus mindestens einem Thermoplast, aus mindestens einem Duroplast, aus Graphit, und/oder aus einem amorphen Kohlenstoff, über dessen Konzentration und/oder Größenverteilung eingestellt wird.

## Claims

1. Method for producing a filter device (16) for the exhaust gas system (12) of an internal combustion engine (10), in which method a material (38, 40) is extruded (46) and then sintered (60) such as to produce a filter structure (20), which comprises channels (24, 26) which are directly adjacent to one another, share a porous filter wall (32) at least in certain portions and are closed alternately at the upstream end or at the downstream end (28, 30), wherein at least certain regions of the filter wall (32) are provided with a curvature during the extrusion (46), **characterized in that** a gas, preferably air or nitrogen, is alternately and intermittently blown (48) into adjacent channels (24, 26) during the extrusion such that at least certain portions of the filter wall (32) have a wavelike curvature in the longitudinal direction.

2. Method according to Claim 1, **characterized in that** the extruder (46) is embodied in such a way that the cross section of at least one filter wall portion (32a) shared by two adjacent channels (24, 26) has a curvature which is concave, as seen from one channel (24), and convex, as seen from the other channel (26).

3. Method according to either of the preceding claims, **characterized in that** ZrO₂ is used to produce the filter wall (32).

4. Method according to Claim 3, **characterized in that** at least certain regions of the filter structure (20) are immersed (56) in an oxidically catalytic material (36), in particular CeO₂ and/or TiO₂ and/or Sc₂O₃, before the actual sintering process (60).

5. Method according to Claim 4, **characterized in that** presintering (52) is carried out at approximately 600 to 1100°C before the immersion process (56).

6. Method according to one of Claims 3 to 5, **characterized in that** the ZrO₂ is doped with CeO₂ and/or TiO₂ and/or Sc₂O₃.

7. Method according to one of the preceding claims, **characterized in that** the porosity of the filter wall (32) is adjusted by admixing (42) an organic pore former (40), in particular a fine powder of at least one thermoplastic, of at least one thermosetting plastic, of graphite and/or of an amorphous carbon, on the basis of the concentration and/or size distribution thereof.

## Revendications

1. Procédé pour fabriquer un dispositif de filtre (16) pour le système de gaz d'échappement (12) d'un moteur à combustion interne (10), dans lequel un matériau (38, 40) est extrudé (46) puis fritté (60) de telle sorte qu'une structure de filtre (20) soit obtenue, laquelle comprend des canaux (24, 26) immédiatement adjacents les uns aux autres, qui présentent une paroi de filtre (32) poreuse au moins en partie commune et qui sont fermés (28, 30) en alternance aux extrémités amont ou aval, la paroi du filtre (32) étant au moins en partie dotée d'une courbure pendant l'extrusion (46), **caractérisé en ce que** dans les canaux adjacents (24, 26), pendant l'extrusion, on souffle (48) en alternance un gaz, de préférence de l'air ou de l'azote, de sorte que la paroi du filtre (32) soit au moins en partie courbée sous forme ondulée dans la direction longitudinale.

2. Procédé selon la revendication 1, **caractérisé en ce que** l'extrudeuse (46) est réalisée de telle sorte qu'au moins une portion de paroi de filtre (32a) commune pour deux canaux adjacents (24, 26) ait une section transversale de courbure concave, vue depuis un canal (24), et de courbure convexe, vue depuis l'autre canal (26).

3. Procédé selon l'une quelconque des revendications précédentes, **caractérisé en ce que** pour la fabrication de la paroi du filtre (32), on utilise du ZrO₂.

4. Procédé selon la revendication 3, **caractérisé en ce qu'**avant l'opération de frittage proprement dite (60), la structure du filtre (20) est trempée (56) au moins en partie dans un matériau à oxydation catalytique (36), notamment du CeO₂ et/ou du TiO₂ et/ou du Sc₂O₃.

5. Procédé selon la revendication 4, **caractérisé en ce qu'**avant la trempe (56), on effectue un pré-frittage (52) à une température d'environ 600 à 1100°C.

6. Procédé selon l'une quelconque des revendications 3 à 5, **caractérisé en ce que** le ZrO₂ est dopé avec du CeO₂ et/ou du TiO₂ et/ou du Sc₂O₃.

7. Procédé selon l'une quelconque des revendications précédentes, **caractérisé en ce que** la porosité de la paroi du filtre (32) lors du mélange (42) d'un agent formeur de pores organique (40), notamment d'une fine poudre constituée d'au moins un thermoplastique, d'au moins un duroplastique, de graphite, et/ou d'un carbone amorphe, est ajustée en termes de concentration et/ou de granulométrie.
